# EUROPEAN PATENT SPECIFICATION

(11) **EP 3 124 201 B1**
(45) Date of publication and mention of the grant of the patent: **20.06.2018**
(21) Application number: 16746359.5
(22) Date of filing: 07.01.2016
(51) Int. Cl.: B29C 47/88, B29C 41/24, B29C 41/34, C08J 9/28, C08K 5/00, C08L 23/00, B29C 47/08, B29K 105/04, B29L 7/00, B29K 23/00

(54) **MICROPOROUS POLYOLEFIN RESIN SHEET PRODUCTION DEVICE AND PRODUCTION METHOD**
HERSTELLUNGSVORRICHTUNG UND HERSTELLUNGSVERFAHREN FÜR MIKROPORÖSE POLYOLEFINHARZFOLIE
DISPOSITIF DE PRODUCTION ET PROCÉDÉ DE PRODUCTION D'UNE FEUILLE MICROPOREUSE EN RÉSINE DE POLYOLÉFINE

(30) Priority: 04.02.2015 JP 2015019866
(43) Date of publication of application: 01.02.2017
(73) Proprietor: Toray Industries, Inc., Tokyo 103-8666 (JP)
(72) Inventor: MAKI, Akihisa, Otsu-shi Shiga 520-8558 (JP); KITAMURA, Osamu, Tochigi 329-2763 (JP); NOMURA, Fumiyasu, Tochigi 329-2763 (JP); KIMISHIMA, Kotaro, Tochigi 329-2763 (JP)
(74) Representative: Global IP Europe Patentanwaltskanzlei
(86) International application number: PCT/JP2016/050398
(87) International publication number: WO 2016/125528

(56) References cited:
- JP-A- 2002 355 882
- JP-A- 2006 281 772
- JP-A- 2008 221 760
- JP-A- 2012 152 979
- US-A- 3 735 729
- US-A- 5 618 568
- US-A1- 2008 191 376
- DATABASE WPI Week 200345 Thomson Scientific, London, GB; AN 2003-472621 XP002768834, -& JP 2002 355882 A (JAPAN STEEL WORKS LTD) 10 December 2002 (2002-12-10)

## Description

### Technical Field

The present invention relates to a production device and a production method for a microporous polyolefin resin sheet.

### Background Art

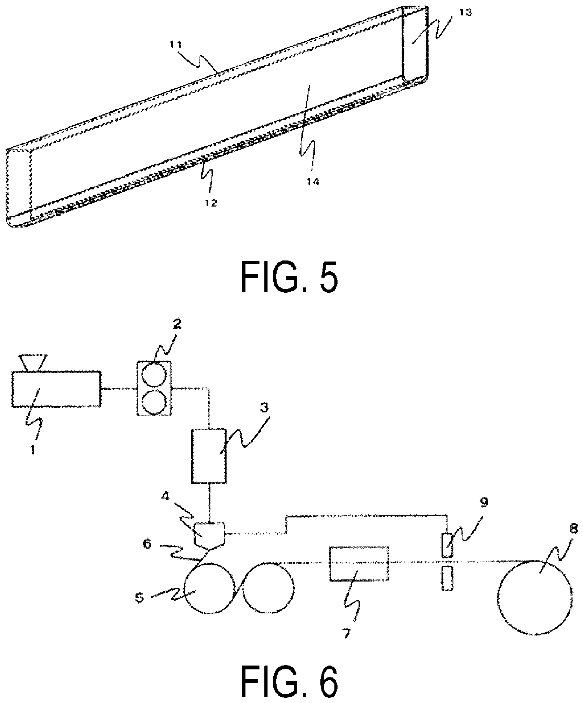

An overview of a typical resin sheet production device will be given hereinafter. As illustrated in FIG. 6, a resin which is melted by being subjected to heat and a shearing force by an extruder 1 is discharged in a certain amount by a gear pump 2. The resin is then passed through a filter 3 so that foreign matter and the like is filtered out, and the resin is discharged and molded into a sheet shape from a mouthpiece 4 having a given lip gap. The sheet-shaped molten resin that is discharged is cooled and hardened by a cooling/hardening device 5. The cooled and hardened sheet 6 is then stretched in a given direction and to a given ratio by a stretching device 7 and is wound with a winder 8. At this time, the thickness of the sheet in the width direction is measured by a thickness meter 9, and the lip gap of the mouthpiece 4 is adjusted by a thickness control device on the basis of this thickness measurement data so that a sheet having a uniform thickness in the width direction is produced.

Incidentally, the film formation speed is increased in order to accommodate the expanding demand for resin films in recent years. However, as the film formation speed increases, the amount of air flowing between the sheet and the cooling/hardening device increases, and the air trapping pressure at the sheet landing spot on the cooling/hardening device becomes high. As a result, the adhesion decreases, and when a certain film formation speed is reached or surpassed, air becomes trapped between the sheet and the cooling/hardening device, resulting in thickness variation or physical property variation.

At this time, in solution film formation containing conventional volatile components, technology for aspirating the air between the sheet and the cooling/hardening device with a decompression chamber so as to suppress the trapping of air between the sheet and the cooling/hardening device and to stably adhere the sheet to the cooling/hardening device has been disclosed.

However, when the molten resin is discharged from the mouthpiece and cooled in the ambient atmosphere or in a cooling/hardening device, a gas of low-molecular-weight components in the polymer, diluents, and additives is discharged into the atmosphere around the decompression chamber and is aspirated into the decompression chamber. The gas of the low-molecular-weight components in the polymer, diluents, and additives that is aspirated into the decompression chamber is further cooled inside the decompression chamber and is liquefied in the decompression chamber. When a certain amount of the liquid accumulates, the liquid drops onto the cooling/hardening device and contaminates the cooling/hardening device to which the sheet is adhered, which leads to sheet defects.

Therefore, an example of a method for preventing the dropping of liquid droplets from a rectifier disposed inside the decompression chamber is a method of preventing the liquefaction of low-molecular-weight components in the polymer, diluents, and additives by heating the rectifier inside the decompression chamber to at least the congealing point (Patent Document 1). There is also a method of forcibly aspirating out any gas generated from the sheet by installing a pipe having an opening part near the gas generation point (Patent Document 2), wherein it is disclosed that a resin sheet is produced stably.

### Citation List

### Patent Literature

Patent Document 1: Japanese Unexamined Patent Application Publication No. 2008-246705A
Patent Document 2: Japanese Unexamined Patent Application Publication No. H11-77802A

US 5 618 568 A discloses a production device comprising a dual-chamber vacuum box for pinning a thermolastic web to a cooling roll. The dual-chamber vacuum box includes a primary vacuum chamber located proximate the surface of the web at the line of contact between the web and the cooling/casting roll. A secondary vacuum chamber is positioned adjacent the second side of the primary vacuum chamber. The dual-chamber vacuum box can create a pressure variation along the line of contact between the web and the cooling roll.

US 2008/191376 A1 discribes a production device which comprises a decompression chamber that is disposed upstream from the casting die in the moving direction of the casting drum. The decompression chamber is attached to the casting die for adjusting the pressure in the upstream area from the casting bead. First and second air shielding plates extend in the casting width directin in standing postures in the decompression chamber to partition the inside of the decompression chamber.

JP 2002 355 882 A discloses a method for manufacturing a resin sheet and a casting apparatus for molding a resin sheet. The casting apparatus comprises a suction chamber main body which is opened toward the molten resin extruded from a die and from which a lower wall faces to the cooling roll.

US 3 735 729 A describes a coating apparatus for applying fluid materials to a moving strip of material to be coated which comprises a suction trough positioned ahead of the stream of coating liquid. This suction trough comprises a box-shaped enclosure. The coating roller and/or the web supported thereon forms the top wall of the suction trough. A suction knife is provided within the suction trough. This suction knife consists of a narrow slot positioned close to the web and extending across the entire width of the coating hopper.

### Summary of Invention

### Technical Problem

However, increasing the film formation speed leads to an increase in the amount of resin that is discharged and an increase in the gas of low-molecular-weight components in the polymer, diluents, and additives that is discharged into the atmosphere around the decompression chamber.

In addition, as described above, the air trapping pressure at the sheet landing spot on the cooling/hardening device also increases as the film formation speed increases, so it is necessary to also reduce the suction pressure of the decompression chamber with respect to the atmospheric pressure. Consequently, the amount of air aspirated by the decompression chamber increases, and the gas concentration of volatile components in the vicinity of the sheet back side - that is, the side where the sheet makes contact with the cooling/hardening device - decreases, which causes a further increase in the amount of gas of low-molecular-weight components in the polymer, diluents, and additives generated from the sheet to maintain a balance of the gas concentration. As a result, an increase in the film formation speed leads to an overwhelming increase in the amount of gas of the low-molecular-weight components in the polymer and the volatile components of diluents and additives flowing into the decompression chamber, which also causes an increase in the amount of liquid adhering to the rectifier in the decompression chamber. Therefore, liquids cannot be completely removed with a method of heating a rectifier as disclosed in Patent Document 1. In addition, depending on the type of diluent or additive, there is a risk of exceeding the flash point. With the method of forcibly aspirating out a gas with a pipe having an opening part as disclosed in Patent Document 2, although it is possible to aspirate a gas discharged from the sheet, it is only possible to aspirate out a portion of the gas diffused into the atmosphere around the adhesion device. When disposed inside the decompression chamber, a large amount of the gas discharged from the sheet is aspirated into the decompression chamber, so it is not possible to aspirate out all of the gas.

An object of the present invention is to provide a production device and a production method for a polyolefin resin sheet, capable of preventing the dropping of a liquid of low-molecular-weight components in a polymer, diluents, and additives onto a cooling/hardening device by forcibly removing the liquid when a gas of low-molecular-weight components in the polymer, diluents, and additives that is gasified around a sheet and a decompression chamber is aspirated into a decompression chamber and liquefied inside the decompression chamber, thereby enabling stable, high-speed film formation.

### Solution to Problem

The problems presented above are solved by a production device in accordance with claim 1.

In addition, the production method for a microporous polyolefin resin sheet of the present invention which solves the problem described above includes: while using the production device for a microporous polyolefin resin sheet according to the present invention, aspirating an inside of the decompression chamber and an inside of the rectifier; and cooling and conveying a polyolefin resin discharged into a sheet shape from the mouthpiece with the cooling/hardening device while keeping a pressure inside the rectifier lower than a pressure inside the decompression chamber.

The "width direction" is the direction orthogonal to the conveying direction of the sheet. "Below the rectifier" refers to the direction facing the surface of the cooling/hardening device closest to the rectifier.

The "lateral surfaces of the rectifier" are the two surfaces extending in the sheet width direction connected by the surface below the rectifier and the ends thereof.

The "upstream side" is the direction on the opposite side as the direction in which the cooling/hardening device conveys the sheet.

The "downstream side" is the direction in which the cooling/hardening device conveys the sheet.

A "lip" refers to a slit opening part for discharging and molding a molten resin into a sheet shape from the mouthpiece.

### Advantageous Effects of Invention

With the present invention, the dropping of a liquid of low-molecular-weight components in the polymer, diluents, and additives contained in the sheet onto the cooling/hardening device is suppressed by forcibly aspirating out the liquid with the rectifier inside the decompression chamber. This makes it possible to stably produce a polyolefin resin sheet in which sheet defects are prevented.

### Brief Description of Drawings

FIG. 1 is a schematic diagram of a production device for a microporous polyolefin resin sheet illustrating an embodiment of the present invention.
FIG. 2 is a top view of the production device for a microporous polyolefin resin sheet illustrated in FIG. 1.
FIG. 3 is a side view of the production device for a microporous polyolefin resin sheet illustrated in FIG. 1.
FIG. 4 is a schematic diagram of a decompression chamber illustrating an embodiment of the present invention.
FIG. 5 is a schematic diagram of a rectifier illustrating an embodiment of the present invention.
FIG. 6 is a schematic diagram of a typical resin sheet production device.

### Description of Embodiments

Examples of embodiments of the present invention will be described hereinafter with reference to the drawings. However, the present invention is not limited to the embodiments described here.

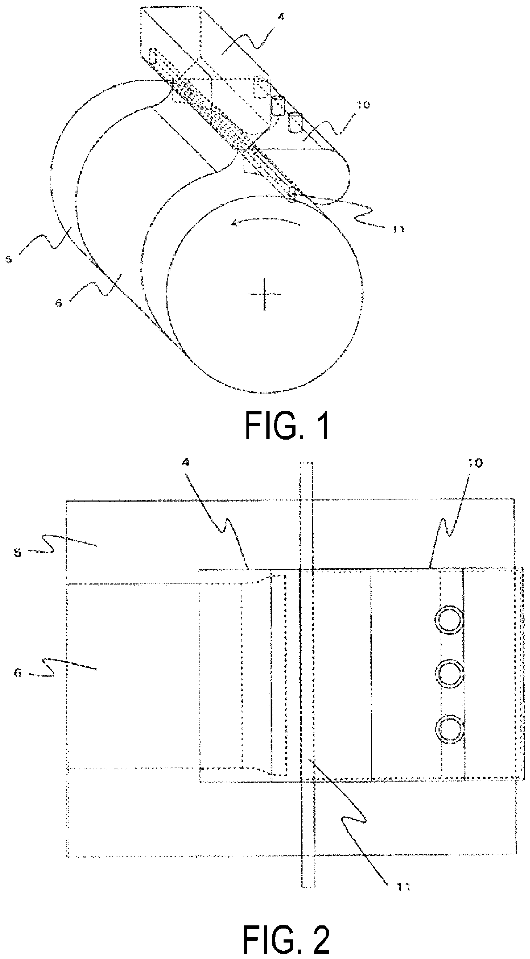

FIG. 1 is a schematic diagram of a polyolefin resin sheet production device of an embodiment of the present invention. As illustrated in FIG. 1, a polyolefin polymer and a diluent are mixed by an extruder, and the melted resin is discharged into a sheet shape from a mouthpiece 4. A sheet 6 discharged from the mouthpiece 4 is then cast onto a cooling/hardening device 5 for cooling while conveying the sheet 6.

The cooling/hardening device 5 may be a roll or a belt.

A decompression chamber 10 having a shape following the outer peripheral surface of the cooling/hardening device 5 is provided adjacent to the mouthpiece 4 on the back side of the mouthpiece 4 - that is, the upstream side in the sheet conveying direction from the landing spot of the sheet 6 on the cast surface. This decompression chamber 10 is installed with the objective of aspirating air between the sheet discharged from the mouthpiece 4 and the cooling/hardening device 5. The decompression chamber 10 has an opening part and a decompression cell, and the opening part is formed across the entire width of the sheet and opposite the space between the mouthpiece 4 and the cooling/hardening device 5.

The decompression cell of the decompression chamber 10 is connected to an external aspiration device, and the air between the cooling/hardening device 5 and the sheet 6 is aspirated via the opening part of the decompression chamber 10 by aspirating the air inside the decompression cell with the aspiration device. As a result, the vicinity of the adhesion part of the sheet on the surface of the cooling/hardening device 5 is decompressed, and the air present between the sheet 6 and the cooling/hardening device 5 is removed, which makes it possible to stably adhere the sheet 6 to the cooling/hardening device 5.

At this time, the degree of decompression in the decompression chamber 10 is preferably controlled to a prescribed value in accordance with film formation conditions such as the viscosity of the molten polymer, the thickness of the sheet, and the conveying speed of the cooling/hardening device. The degree of decompression in the decompression chamber 10 is preferably in the range of not less than -2,500 and not greater than -20 Pa with respect to atmospheric pressure. The lower limit of the degree of decompression in the decompression chamber 10 is more preferably not less than - 1,500 Pa, and the upper limit is more preferably not greater than -50 Pa with respect to atmospheric pressure.

The air removed by the decompression chamber 10 contains a gas and a particulate liquid of low-molecular-weight components in the polymer, and volatile components of diluents or the like with high vaporizability or coagulability contained in the sheet. The volatile components easily coagulate when the temperature decreases. In addition, when producing a resin sheet including a mixture of a polymer and a diluent, in particular, the diluent such as liquid paraffin contained in the sheet is suspended as particulate oil droplets which easily adhere to the device, regardless of the heating element used, and the diluent drops down when a certain amount has accumulated. As a result, the cooling/hardening device surface is contaminated, and the surface of the sheet facing the cooling/hardening device is contaminated.

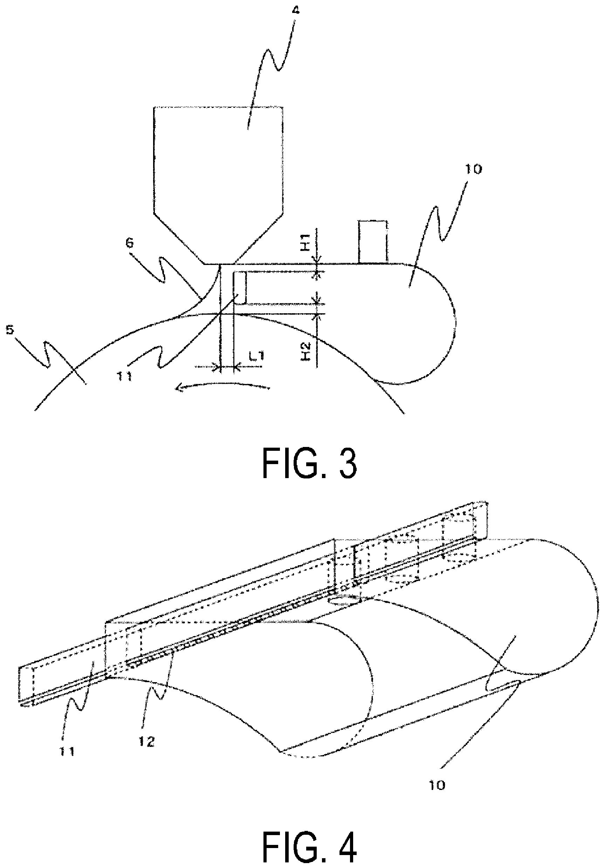

FIG. 2 is a top view of FIG. 1, and FIG. 3 is a side view of FIG. 1. As illustrate in FIGS. 2 and 3, a rectifier 11 is provided over the sheet width direction on the upstream side in the sheet conveying direction of the sheet 6 discharged from the mouthpiece 4 inside the decompression chamber 10. The rectifier 11 is provided from one side surface plate to the other side surface plate inside the decompression chamber 10 in the vicinity of the opening part of the decompression chamber. In addition, the rectifier 11 may be provided passing through the side surface plates on both sides of the decompression chamber 10. As illustrated in FIG. 3, the rectifier 11 is disposed defining a gap H1 between the lower surface of the mouthpiece 4 and the upper surface of the rectifier 11. The rectifier 11 preferably has a gap of not less than 1 mm and more preferably has a gap of not less than 5 mm. In addition, the rectifier is disposed defining a gap H2 between the bottom surface of the rectifier 11 and the cooling/hardening device 5. The rectifier 11 preferably has a gap of not less than 1 mm and more preferably has a gap of not less than 5 mm. As a result, it is possible to establish a rectified state in which there is no conflict between the flow fields of both an accompanying air flow due to the rotation of the cooling/hardening device and the flow of air due to the aspiration of the decompression chamber. The rectifier is disposed defining a gap L1 between the rectifier and the sheet back surface. The rectifier is preferably at a position from 1 to 10 mm and more preferably at a position from 1 to 5 mm on the upstream side from the mouthpiece lip. As a result, the spatial area formed by the rectifier and the cooling/hardening device becomes small, which makes it possible to suppress the formation of air vortexes and to reduce the vibration of the sheet.

As described above, a gas of low-molecular-weight components in the polymer, diluents, and additives contained in the sheet adheres to the decompression chamber 10 when producing a resin sheet, which causes a problem in that the cooling/hardening device is contaminated. In particular, research conducted by the present inventors revealed that a liquid of the low-molecular-weight components in the polymer, diluents, and additives adhering to the rectifier 11 disposed inside the decompression chamber 10 drops onto the cooling/hardening device 5 and contaminates the surface of the cooling/hardening device 5.

This rectifier 11 is hollow on the inside, and a plurality of openings 12 connecting to the inside are formed in the surface of the rectifier 11. The openings 12 are formed in the bottom surface or the side surfaces of the rectifier. The openings 12 may be formed in the bottom surface alone or in both the bottom and side surfaces. In general, a liquid of the low-molecular-weight components in the polymer, diluents, and additives adhering to the rectifier 11 reaches the bottom surface along the side surfaces of the rectifier 11 due to gravity. Therefore, providing the openings 12 in the bottom surface of the rectifier 11 makes it possible to aspirate out a liquid of the low-molecular-weight components in the polymer, diluents, and additives which reaches the bottom of the rectifier 11. Further, providing the openings 12 in the side surfaces of the rectifier 11 makes it possible to aspirate out a liquid of the low-molecular-weight components in the polymer, diluents, and additives before the liquid reaches the bottom surface of the rectifier 11, which makes it possible to further inhibit the growth of the liquid of the low-molecular-weight components in the polymer, diluents, and additives and to prevent the dropping of the liquid. In particular, when a liquid of the low-molecular-weight components in the polymer, diluents, and additives adhering to the side surfaces is blown away by the flow of air in the decompression chamber 10 before the liquid reaches the bottom surface, providing the openings 12 on the side surfaces of the rectifier 11 as well enhances the effect of forcibly removing the liquid of the low-molecular-weight components in the polymer, diluents, and additives. In addition, the openings 12 may be formed in a single row or in a plurality of rows with respect to the surface of the rectifier 11. By forming a plurality of rows of openings 12, it is possible to further inhibit the growth of the liquid of the low-molecular-weight components in the polymer, diluents, and additives. In addition, it is preferable for the bottom surface of the rectifier 11 to have a rounded shape or for the width in the sheet conveying direction to become narrow toward the bottom. This makes it easy to guide the liquid of the low-molecular-weight components in the polymer, diluents, and additives adhering to the side surface parts 14 of the rectifier 11 into the openings 12. The openings 12 are formed into a shape such as a hole, a slit, or a porous shape. The holes may be formed as round holes, oval-shaped holes, polygonal holes, or long holes. The openings may be formed with one type of shape, or a plurality of types of shapes may be combined.

The inside of the rectifier 11 is aspirated by an aspiration device, and the inside of the rectifier 11 is always kept at a negative pressure. The sheet discharged from the mouthpiece 4 is cast on the cooling/hardening device 5, and a polyolefin resin sheet is thereby formed. Since the inside of the rectifier is always kept at a negative pressure, air is aspirated from the openings of the rectifier, and a liquid of the low-molecular-weight components in the polymer, diluents, and additives adhering to the rectifier 11 is forcibly removed. At this time, the degree of decompression inside the rectifier 11 is preferably adjusted in accordance with the film forming conditions or the size of the liquid adhering to the rectifier 11. The degree of decompression inside the rectifier 11 is preferably not greater than -50 Pa and more preferably not greater than -250 Pa with respect to atmospheric pressure. The upper limit of the degree of decompression inside the rectifier 11 is not particularly limited, but the degree of decompression is set so that the sheet 6 discharged from the mouthpiece 4 is not vibrated and is preferably not less than -10 kPa.

The connection method for the rectifier 11 and the aspiration device is not particularly limited, but the rectifier 11 and the aspiration device may be connected, for example, by piping of a given diameter and a given length. The piping may connect to the hollow part inside the rectifier 11 in series or may connect perpendicularly to the bottom surface or the side surfaces of the rectifier 11. The connection locations of the rectifier 11 and the aspiration device may be one location or may be two or more locations in the width direction. By aspirating from equal positions in two or more locations in the width direction using the center of the rectifier in the width direction as a reference, it is possible to make the degree of decompression inside the rectifier 11 uniform. When the piping is connected in series to the hollow part inside the rectifier 11 and the piping is connected at only one location at the end of one side of the rectifier, the surface of the end forming symmetry, using the center of the rectifier 11 as a reference, is closed. When the piping is connected to the bottom surface or the side surfaces of the rectifier 11, both ends of the hollow part inside the rectifier 11 are closed. In addition, a connection pipe for converting from the shape of the rectifier 11 to the shape of the piping is preferably provided between the rectifier 11 and the aspiration device. The aspiration device for aspirating the air inside the decompression chamber 10 and the rectifier 11 may be a blower or a vacuum pump.

Since the air inside each of the decompression chamber 10 and the rectifier 11 is aspirated by an aspiration device, the inside of the decompression chamber 10 assumes a first negative pressure range, and the inside of the rectifier 11 assumes a second negative pressure range. The pressure P2 of the second negative pressure range is required to be lower than the pressure P1 of the first negative pressure range. If P1 < P2, a liquid of the liquid of the low-molecular-weight components in the polymer, diluents, and additives aspirated inside the decompression chamber and adhering to the rectifier is not forcibly removed from the opening part of the rectifier, so the effect of the present invention cannot be achieved.

The air inside the decompression chamber 10 or the air inside the rectifier 11 may be each aspirated by separate aspiration devices or may be aspirated by a single aspiration device. When aspirated with a single aspiration device, a valve is preferably provided between the decompression chamber 10 and the rectifier 11 and the aspiration device. The amount of air aspirated from inside the decompression chamber 10 and the rectifier 11 is adjusted by the degree of opening of the valve, which makes it possible to achieve a prescribed degree of decompression.

The suction wind speed from the openings 12 of the rectifier 11 is determined by the physical properties of the liquid of the low-molecular-weight components in the polymer, diluents, and additives adhering to the rectifier 11 but is preferably not less than 10 m/s and more preferably not less than 20 m/s.

The shape dimensions of the openings 12 of the rectifier 11 are preferably determined by the size of the liquid or the pressure balance of the rectifier. Uniform dimensions may be used over the entire width, or the shape may have a gradient. For example, when the openings 12 are round holes, the hole diameter may be constant over the entire width, or the holes may be formed so that the hole diameter at the ends is smaller than the hole diameter in the center. The round holes preferably have a hole diameter of not greater than 1 mm.

The pitch of the holes 12 of the rectifier 11 is preferably determined by the size of the liquid or the pressure balance of the rectifier, and the openings are preferably formed over the sheet width direction. For example, when the openings 12 are round holes, the pitch is preferably not greater than 20 mm, more preferably not greater than 10 mm, and particularly preferably not greater than 5 mm. In addition, when the openings 12 are slits, the openings 12 of the rectifier 11 may be provided over the entire width with the same length as the length in the width direction of the lip of the mouthpiece, or closed parts may be provided in some areas.

The shape of the rectifier 11 is not particularly limited, but the shape of the rectifier 11 is determined in accordance with the pressure balance inside the rectifier 11, the size of the space of the decompression chamber 10, and the like, and the rectifier is preferably formed with a rectangular column shape, a cylindrical shape, or an elliptical cylindrical shape. The rectifier 11 may be extrusion-molded or may be welded.

The material of the rectifier 11 is not particularly limited, but a material with high corrosion resistance is preferable, and the rectifier 11 is more preferably formed from stainless steel. Alternatively, the surface of the rectifier 11 may be subjected to surface treatment such as nickel plating, chrome plating, or zinc plating in order to give the rectifier 11 corrosion resistance.

The surface of the rectifier 11 may be given a large surface energy in order to prevent a liquid adhering to the rectifier 11 from growing into a liquid reservoir as the liquid drops. The method for achieving this may include roughening the bottom surface or the side surfaces of the rectifier by sand blasting. The surface roughness is preferably a center line average roughness (Ra) of from 0.2 to 20 µm and a ten point average height (Rz) of from 1 to 120 µm in accordance with JIS B0601-1994. The method described above is merely one example, and a method differing from this method may also be used. For example, there is a method of enhancing the compatibility of the rectifier and the liquid by performing lipophilic or hydrophilic treatment.

It is preferable to remove unnecessary protrusions from the wall surface inside the decompression cell of the decompression chamber 10 main body and to ensure that the tip surfaces of bolts required for fastening are level with the surface of the inside wall. If there are protrusions inside the decompression chamber 10, air vortexes may be generated around the protrusions, which causes the accumulation of a liquid of low-molecular-weight components in the polymer, diluents, and additives. When a liquid of low-molecular-weight components in the polymer, diluents, and additives is observed on the wall surface inside the decompression cell of the decompression chamber 10 main body, an aspiration mechanism may be provided on the wall surface.

In the present invention, it is preferable to use a solution of a polyolefin resin prepared by mixing a polyolefin resin such as polyethylene, polypropylene, polystyrene, or polymethyl pentene and a diluent, and melting the mixture by heating as the resin to be fed to the mouthpiece 4. The diluent determines the structure for the micropore formation of a microporous plastic film and contributes to the improvement of stretchability when stretching the film (for example, this may refer to a reduction in spots with the draw ratio for expressing strength).

The diluent is not particularly limited as long as the diluent has the property that it can be mixed or dissolved in the polyolefin resin. The composition may mix with the polyolefin in the melt-kneaded state, but a solid solvent may also be mixed into the diluent at room temperature. Examples of such a solid diluents include stearyl alcohol, ceryl alcohol, and paraffin wax. In order to prevent spots or the like in stretching, and out of consideration that the substance may be applied at a later time, the diluent is preferably a liquid at room temperature. Examples of liquid diluents include aliphatic, cycloaliphatic, or aromatic hydrocarbons such as nonane, decane, decalin, paraxylene, undecane, dodecane, and liquid paraffin, mineral oil distillates having boiling points corresponding to those of the aforementioned hydrocarbons, and phthalic acid esters which are liquids at room temperature such as dibutylphthlate and dioctylphthalate. In order to obtain a gel-like sheet having a stable liquid diluent content, it is more preferable to use liquid paraffin. The viscosity of the liquid diluent is preferably from 20 to 200 cSt at 40°C, for example.

From the perspective of enhancing the formability of the extrudate, the compounding ratio of the polyolefin resin and the diluent is preferably such that the polyolefin resin constitutes from 10 to 50 mass% on the basis of a total of 100 mass% of the polyolefin resin and the diluent. The uniform melt-kneading process for the polyolefin solution is not particularly limited, but a calender, various mixers, an extruder having a screw, or the like may be used.

### Working Examples

The results of producing polyolefin resin sheets using the sheet production device described above will be described hereinafter.

### Working Example 1

A specific sheet production method in this embodiment is as follows.
(1) Sheet material:
   - High-density polyethylene (HDPE): viscosity of 1,000 Pa•s. Here, the viscosity was measured with the method of JIS K7117-2 under conditions with a shearing rate of 100/s and a temperature of 200°C.
   - Liquid paraffin (LP): kinematic viscosity of 50 cSt (at 40°C mm²/s).
(2) Preparation: After the sheet material was dried, the sheet material was fed to an extruder. After the sheet material was passed through a gear pump and a filter, the sheet material was fed to a mouthpiece. In addition, the device temperature leading to the mouthpiece was set to 230°C.
(3) Mouthpiece:
   The sheet material described above was discharged at a flow rate of 250 kg/hr through a slit width of 300 mm. Note that the LP concentration in the polyolefin resin solution is 70 mass%, and 175 kg/hr consists of LP. Although also dependent on the sheet width and the degree of decompression, LP with a flow rate of 0.1% is volatalized from the sheet, and 4.2 kg of the volatilized LP is aspirated together with the ambient air into the decompression chamber per day.
(4) Cooling/hardening device:
   A sheet-molding roll with a mirror surface was used as a cooling/hardening device. In a state in which the temperature of the sheet-molding roll was set to 35°C, the polyolefin resin solution was discharged in a sheet shape from the mouthpiece onto the roll and molded at a sheet-molding roll speed of 10 m/min.
(5) Decompression chamber:
   A decompression chamber was installed after setting the gap between the mouthpiece and the sheet-forming roll to 40 mm and setting the lip position of the mouthpiece at the top of the sheet-forming roll. In addition, the decompression chamber was connected to a blower for decompressing the inside of the decompression chamber. This blower was shared with the rectifier, and a valve was provided between the decompression chamber and the blower in order to adjust the amount of air to be aspirated from the inside of the decompression chamber. The pressure inside the decompression chamber was adjusted to -500 Pa.
(6) Rectifier:
   A rectifier with a rectangular column shape was produced. The openings in the bottom surface of the rectifier opposite the cooling/hardening device were formed as holes with a hole diameter of 1 mm and a pitch of 5 mm and were processed over the entire width with the same length as the length in the width direction of the mouthpiece lip. A roundness R2 was provided on the bottom part of the rectifier. In addition, the rectifier was disposed inside the decompression chamber. The gap between the rectifier and the sheet back surface was 5 mm, the gap between the bottom surface of the mouthpiece and the upper surface of the rectifier opposing the bottom surface of the mouthpiece was 5 mm, and the gap between the cooling/hardening device and the bottom surface of the rectifier opposing the cooling/hardening device was 10 mm. The rectifier was connected to a blower in order to decompress the inside of the rectifier, and a connection pipe and piping were connected to both ends of the rectifier so as to form a series connection with the hollow part inside the rectifier. In addition, the blower was shared with the decompression chamber, and a valve was provided between the rectifier and the blower in order to adjust the amount of air to be aspirated from the inside of the rectifier. The pressure inside the rectifier was adjusted to -600 Pa.

As a result of film formation, a liquid reservoir generated on the side surfaces of the rectifier was rapidly aspirated and removed from the openings on the bottom surface of the rectifier, and a sheet of good quality was obtained without any dropping of liquid onto the cast surface of the cooling/hardening device from the inside of the decompression chamber.

### Working Example 2

Film formation was performed with the same device configuration and film formation conditions as in Working Example 1 with the exception that the following rectifier was used.

### Rectifier

A rectifier with a rectangular column shape having no roundness on the bottom part was produced. The opening parts in the bottom surface of the rectifier opposite the cooling/hardening device were formed as holes with a hole diameter of 1 mm and a pitch of 5 mm and were processed over the entire width with the same length as the width length of the mouthpiece lip. In addition, the rectifier was disposed inside the decompression chamber. The gap between the rectifier and the sheet back surface was 5 mm, the gap between the bottom surface of the mouthpiece and the upper surface of the rectifier opposing the bottom surface of the mouthpiece was 5 mm, and the gap between the cooling/hardening device and the bottom surface of the rectifier opposing the cooling/hardening device was 10 mm. The rectifier was connected to a blower in order to decompress the inside of the rectifier, and a connection pipe and piping were connected to both ends of the rectifier so as to form a series connection with the hollow part inside the rectifier. In addition, the blower was shared with the decompression chamber, and a valve was provided between the rectifier and the blower. The degree of decompression inside the rectifier was set to -600 Pa.

As a result of film formation, the efficiency of removing a liquid reservoir generated on the side surfaces of the rectifier was reduced in comparison to the production device of Working Example 1 having a roundness R2 on the bottom part of the rectifier, but no effects on the quality of the sheet were observed.

### Comparative Example 1

Film formation was performed with the same device configuration and film formation conditions as in Working Example 1 with the exception that the following rectifier was used.

### Rectifier

A rectifier with a rectangular column shape having no opening part was produced. In addition, the rectifier was disposed inside the decompression chamber. The gap between the rectifier and the sheet back surface was 5 mm, the gap between the bottom surface of the mouthpiece and the upper surface of the rectifier opposing the bottom surface of the mouthpiece was 5 mm, and the gap between the cooling/hardening device and the bottom surface of the rectifier opposing the cooling/hardening device was 10 mm.

As a result of film formation, sheet defects were generated due to the dropping of liquid from the rectifier to the cooling/hardening device, and a good sheet was not obtained.

### Reference Signs List

1 Extruder
2 Gear pump
3 Filter
4 Mouthpiece
5 Cooling/hardening device
6 Sheet
7 Stretching device
8 Winder
9 Thickness meter
10 Decompression chamber
11 Rectifier
12 Opening part
13 Hollow part
14 Side surface part

## Claims

1. A production device for a microporous polyolefin resin sheet comprising:
- a mouthpiece (4) that discharges a resin comprising a mixture of a polyolefin resin and a diluent into a sheet shape;
- a cooling/hardening device (5) that cools a sheet (6) discharged from the mouthpiece (4) while conveying the sheet (6); and
- a decompression chamber (10), installed on an upstream side in a sheet conveying direction from the mouthpiece (4), that aspirates air between the sheet (6) discharged from the mouthpiece (4) and the cooling/hardening device (5); wherein
- the decompression chamber (10) has an opening part opposing a space between the mouthpiece (4) and the cooling/hardening device (5);
- a rectifier (11) is provided inside the decompression chamber (10) across a sheet width direction in a vicinity of the opening part;
- the rectifier (11) is hollow on an inside, and a plurality of openings (12) connecting to the inside are formed in a surface thereof, **characterized in that**
- the openings (12) of the rectifier (11) are formed only in a bottom surface of the rectifier (11).

2. The production device for a microporous polyolefin resin sheet according to claim 1 wherein the bottom surface of the rectifier (11) has a rounded shape.

3. The production device for a microporous polyolefin resin sheet according to claim 1 wherein a width of the rectifier (11) becomes narrow in a sheet conveying direction toward the bottom.

4. The production device for a microporous polyolefin resin sheet according to any one of claims 1 to 3 wherein a form of the openings of the rectifier (11) is a hole, a porous, or a slit form.

5. A production method for a microporous polyolefin resin sheet comprising: while using the production device for a microporous polyolefin resin sheet described in any one of claims 1 to 4,
- aspirating each of an inside of the decompression chamber (10) and an inside of the rectifier (11); and
- cooling and conveying a polyolefin resin discharged into a sheet shape from the mouthpiece (4) with the cooling/hardening device (5) while keeping a pressure inside the rectifier (11) lower than a pressure inside the decompression chamber.

## Patentansprüche

1. Herstellungsvorrichtung für eine mikroporöse Polyolefinharzbahn, mit:
- einem Mundstück (4), das ein Harz, das eine Mischung eines Polyolefinharzes und eines Verdünnungsmittels aufweist, in einer Bahnform ausstößt;
- einer Kühlungs-/Härtungsvorrichtung (5), die eine aus dem Mundstück (4) ausgestoßene Bahn (6) kühlt, während die Bahn (6) befördert wird; und
- einer Dekompressionskammer (10), die auf einer in eine Bahnbeförderungsrichtung vorgelagerten Seite vom Mundstück (4) installiert ist, die Luft zwischen der aus dem Mundstück (4) ausgestoßenen Bahn (6) und der Kühlungs-/Härtungsvorrichtung (5) absaugt; wobei
- die Dekompressionskammer (10) einen Öffnungsteil aufweist, der einem Raum zwischen dem Mundstück (4) und der Kühlungs-/Härtungsvorrichtung (5) gegenüberliegt;
- ein Rektifizierapparat (11) innerhalb der Dekompressionskammer (10) über eine Bahnbreitenrichtung in der Nähe des Öffnungsteils vorgesehen ist;
- der Rektifizierapparat (11) im Inneren hohl ist, und eine Vielzahl von Öffnungen (12), die mit dem Inneren verbunden sind, in dessen Oberfläche ausgebildet sind, **dadurch gekennzeichnet, dass**
- die Öffnungen (12) des Rektifizierapparats (11) nur in einer Unterseite des Rektifizierapparats (11) ausgebildet sind.

2. Herstellungsvorrichtung für eine mikroporöse Polyolefinharzbahn nach Anspruch 1, wobei die Unterseite des Rektifizierapparats (11) eine abgerundete Form aufweist.

3. Herstellungsvorrichtung für eine mikroporöse Polyolefinharzbahn nach Anspruch 1, wobei eine Breite des Rektifizierapparats (11) in eine Bahnbeförderungsrichtung zum unteren Teil schmal wird.

4. Herstellungsvorrichtung für eine mikroporöse Polyolefinharzbahn nach einem der Ansprüche 1 bis 3, wobei eine Form der Öffnungen des Rektifizierapparats (11) eine Loch-, eine Poren- oder eine Schlitzform ist.

5. Herstellungsverfahren für eine mikroporöse Polyolefinharzbahn, die aufweist:
während eine Herstellungsvorrichtung für eine mikroporöse Polyolefinharzbahn nach einem der Ansprüche 1 bis 4 verwendet wird,
- Absaugen jeweils eines Inneren der Dekompressionskammer (10) und eines Inneren des Rektifizierapparats (11); und
- Abkühlen und Befördern eines zu einer Bahnform aus dem Mundstück (4) ausgestoßenen Polyolefinharzes mit der Kühlungs-/Härtungsvorrichtung (5), während ein Druck innerhalb des Rektifizierapparats (11) niedriger als ein Druck innerhalb der Dekompressionskammer gehalten wird.

## Revendications

1. Dispositif de production d'une feuille microporeuse en résine de polyoléfine, comprenant :
- une bouche de distribution (4) par où est sortie en forme de feuille une résine comprenant un mélange d'une résine de polyoléfine et d'un diluant;
- un dispositif de refroidissement et de solidification (5) refroidissant une feuille (6) sortie par la bouche de distribution (4) lors du transport de la feuille (6) ; et
- une chambre de décompression (10), présentée en amont dans le sens de transport de la feuille depuis la bouche de distribution (4), qui aspire l'air entre la feuille (6) sortie par la bouche de distribution (4) et le dispositif de refroidissement et de solidification (5) ; où
- la chambre de décompression (10) présente une section d'ouverture opposant un espace entre la bouche de distribution (4) et le dispositif de refroidissement et de solidification (5) ;
- une plaque de rectification (11) prévue à l'intérieur de la chambre de décompression (10) dans le sens de la largeur de la feuille, à proximité de la section d'ouverture ;
- la plaque de rectification (11) est creuse à l'intérieur, et une pluralité d'ouvertures (12) débouchant sur l'intérieur sont formées à sa surface, **caractérisé en ce que**
- les ouvertures (12) de la plaque de rectification (11) sont exclusivement formées sur une surface inférieure de la plaque de rectification (11).

2. Dispositif de production d'une feuille microporeuse en résine de polyoléfine selon la revendication 1, où la surface inférieure de la plaque de rectification (11) a une forme arrondie.

3. Dispositif de production d'une feuille microporeuse en résine de polyoléfine selon la revendication 1, où la largeur de la plaque de rectification (11) diminue vers le bas dans la direction de transport de la feuille.

4. Dispositif de production d'une feuille microporeuse en résine de polyoléfine selon l'une des revendications 1 à 3, où les ouvertures de la plaque de rectification (11) sont en forme de trous, de pores ou de fentes.

5. Procédé de production d'une feuille microporeuse en résine de polyoléfine, comprenant :
pendant le fonctionnement du dispositif de production d'une feuille microporeuse en résine de polyoléfine selon l'une des revendications 1 à 4,
- une aspiration à laquelle sont soumis l'intérieur de la chambre de décompression (10) et l'intérieur de la plaque de rectification (11) ; et
- le refroidissement et le transport d'une résine de polyoléfine sortie en forme de feuille par la bouche de distribution (4) au moyen du dispositif de refroidissement et de solidification (5), en maintenant la pression à l'intérieur de la plaque de rectification (11) inférieure à la pression à l'intérieur de la chambre de décompression.
